(19) Europäisches Patentamt
European Patent Office
Office européen des brevets

(11) Publication number: **0 404 086 A2**

(12) **EUROPEAN PATENT APPLICATION**

(21) Application number: **90111613.7**

(51) Int. Cl.5: **B29C 67/22, //B29K105:04**

(22) Date of filing: **20.06.90**

(30) Priority: **20.06.89 US 368573**

(43) Date of publication of application: **27.12.90 Bulletin 90/52**

(84) Designated Contracting States: **AT BE CH DE ES FR GB IT LI LU NL SE**

(71) Applicant: **U.C. INDUSTRIES, INC.**
**2 Sylvan Way**
**Parsippany New Jersey 07054(US)**

(72) Inventor: **Breindel, Raymond M.**
**11383 Sagebrush Avenue**
**Uniontown, Ohio 44685(US)**

(74) Representative: **Türk, Gille, Hrabal**
**Bruecknerstrasse 20**
**D-4000 Düsseldorf 13(DE)**

(54) **Process for preparing extruded foam bodies.**

(57) A process for preparing an extruded elongate foam body characterized as having minimal surface defects such as pearls, streaks, foamy appearance and corrugations and having a density of between about 14.4 and about 56.1 kg/$m^3$ which comprises the steps of

(A) heat plastifying a mixture of at least one thermoplastic resin and at least one nucleating agent;

(B) adding at least one blowing agent selected from the group consisting of chlorodifluoromethane; 1,1-dichloro-2,2,2-trifluoroethane; 1-chloro-1,1-difluoroethane; 1,1,1,2-tetrafluoroethane; 1,1-dichloro-1-fluoroethane; 1-chloro-1,2,2,2-tetrafluoroethane and mixtures of two or more thereof to the mixture;

(C) forming a blowable resin mixture by uniformly mixing the blowing agent and the mixture of step (A) in the resin under a pressure sufficient to prevent blowing of the resin;

(D) extruding the blowable resin mixture through a die (20), which has a die lip temperature maintained at about 10° C to about 77° C and into a region wherein the blowable resin mixture expands into a foam body; and

(E) cooling the foam body.

In one embodiment, the region of less than atmospheric pressure is formed by an elongated chamber (15) with the blowable resin mixture passing through a die at one end of such chamber and such foam body passing through a pool of water (17) at the opposite end of the chamber. The process results in the formation of extruded expanded thermoplastic resins such as polystyrene resins characterized as having relatively small average cell sizes such as from about 0.2 to about 0.5 mm., improved and higher compressive strengths, and higher cell volumes.

EP 0 404 086 A2

# PROCESS FOR PREPARING EXTRUDED FOAM BODIES

## Field of the Invention

The present invention relates to a process for preparing extruded foams which are in the form of billets or boards and which are characterized as having minimal surface defects and a density between about 0.9 and about 3.5 pounds per cubic foot. More particularly, the invention relates to the preparation of extruded foamed thermoplastic resin wherein the foaming occurs in a region of subatmospheric pressure.

## Background of the Invention

Extruded synthetic resinous foams are highly desirable for many applications including thermal insulation, decorative purposes, packaging and the like. One particularly important application for styrene polymer foams is in the field of thermal insulation.

Surface quality of extruded synthetic resinous foams is highly desirable for aesthetic as well as commercial reasons. Graphic Arts require foams of uniform or nearly uniform surface nature. Purchasers of foams desire foams which have uniform surface qualities.

Surface quality of foams is affected by the quantity of pearls, streaks, foamy appearance or corrugations on the surface of the foams. Pearls describes defects which appear as a whitish area or bump on the surface of the foam. Streaks describes the appearance of whitish striations on the foam surface. Foamy describes surfaces which have a pebbled and nonuniform appearance. Foamy describes the difference in appearance on cross-section between the surface of the foam and the body of the foam. Such defects can have a deleterious effect on desirable foam properties, such as thermal, compressive and water resistances.

Surface quality may be controlled by adjusting the die opening or pressure exerted on the extruding foam-body. It is desirable to have a process which controls surface quality in a relatively convenient manner. Moreover, a process which may easily control surface quality would be most desirable.

In recent years, there has been significant pressure applied by the environmentalists and the government for the reduction, if not a complete ban, on the use of the chlorofluorocarbons (CFCs) for applications including aerosols, refrigerants, foam-blowing agents and specialty solvents within the electronics and aerospace industries.

The general procedure utilized in the preparation of extruded synthetic resinous foam bodies generally involves the following steps. A resin such as a polystyrene resin is heat plastified and one or more fluid blowing agents is incorporated and thoroughly mixed into the plastified resin under conditions which permit thorough mixing of the volatile blowing agent into the plastified resin and preventing foaming of the mixture. The intimate mixture of resin and blowing agent(s) which may contain other optional additives including, for example, nucleating agents, flame-retardants for the foam, plasticizer, etc., is cooled, and the pressure on the mixture is reduced which results in foaming of the mixture and formation of the desirable foamed body. Foam bodies having desirable properties are obtained by extruding the cooled plastified mixture of resin and blowing agents into a region of lower pressure. In some foam extrusion processes, the foamable mixture is extruded into a vacuum chamber so that the expansion of the foam is accomplished under subatmospheric pressure. Examples of vacuum foam extrusion apparatuses and methods may be found in U.S. Patents 3,584,108; 3,169,272; and 3,822,331. One of the difficulties when utilizing vacuum extrusion technology relates to the curing and extraction of the material from a vacuum chamber, specially when the material is delicate or fragile such as styrene foam in the form of large boards or billets. A solution to this problem involves the use of an incline barometric leg as described in U.S. Patents 3,704,083 and 4,044,084. Further modifications and improvements in extrusion apparatus utilizing a large barometric leg which when evacuated is essentially filled with water, but which includes a vacuum chamber at its upper end into which the extrudate passes from the die for expansion is described in U.S. Patent 4,199,310.

## Summary of the Invention

A process for preparing an extruded elongate foam body characterized as having minimal surface defects such as pearls, streaks, foamy appearance and corrugations and having a density of between about 14.4 and about 56.1 kg/$m^3$ (about 0.9 and about 3.5 pounds per cubic foot) is described . The process comprises the steps of

(A) heat plastifying a mixture of at least one thermoplastic resin and at least one nucleating agent;

(B) adding at least one blowing agent selected from the group consisting of chlorodifluoromethane; 1,1-dichloro-2,2,2-trifluoroethane; 1-chloro-1,1-difluoroethane; 1,1,1,2-tetrafluoroethane; 1,1-dichloro-1-fluoroethane; 1-chloro-1,2,2,2-tetrafluoroethane and mixtures of two or more thereof to the mixture;

(C) forming a blowable resin mixture by uniformly mixing the blowing agent and the mixture of step (A) under a pressure sufficient to prevent blowing of the resin;

(D) extruding the blowable resin mixture through a die, which has a die lip temperature maintained at about 10° to about 77°C (about 50°F to about 170°F) and into a region wherein the blowable resin mixture expands into a foam body; and

(E) cooling the foam body.

In one embodiment, the region of less than atmospheric pressure is formed by an elongated chamber with the blowable resin mixture passing through a die at one end of such chamber and such foam body passing through a pool of water at the opposite end of the chamber. The process results in the formation of extruded expanded thermoplastic resins such as polystyrene resins characterized as having the desired densities, relatively small average cell sizes such as from about 0.2 to about 0.5 mm., improved and higher compressive strengths, and higher cell volumes.

## Brief Description of the Drawings

Fig. 1 is a schematic broken side elevation of preferred apparatus for practicing the present invention;

Fig. 2 is an enlarged fragmentary top plan view of the fan-shape-arcuate slot die and shaping mechanisms at the die end of the vacuum chamber;

Fig. 3 is a schematic illustration of one of the pneumatic piston-cylinder assemblies for floating the shaping rolls or subsequent upper conveyor; and

Fig. 4 is a schematic illustration of a preferred assembly for controlling die lip temperatures.

## Description of the Preferred Embodiments

Throughout the specification and claims, all parts and percentages are by weight unless otherwise indicated.

The thermoplastic resins which are extruded and foamed in accordance with the process comprise alkenyl-substituted aromatic resins (homopolymers and copolymers), polyphenylene ethers, polyvinyl chloride, vinylidene chloride resins such as copolymers of vinylidene chloride (80 parts) and acrylonitrile (20 parts), polyolefin resins such as polyethylene and copolymers of ethylene and vinyl acetate or ethyl acrylate, etc. Mixtures of such resins may be prepared and foamed in accordance with the process of the invention. For example, mixtures of a styrene resin and a polyphenylene ether can be foamed to produce foam bodies by the process of the invention. The preferred thermoplastic resins are the alkenyl-substituted aromatic resins.

The alkenyl-substituted aromatic resins which are extruded and foamed in accordance with the process of the present invention are polymers which comprise at least 50% of a monomer which is at least one alkenyl aromatic compound characterized by the general formula

$Ar\text{-}C(R)=CH_2$ (I)

wherein Ar represents an aromatic hydrocarbon group or an aromatic halohydrocarbon group of the benzene series and R is hydrogen or a methyl group. The remaining monomer used in the preparation of the polymer comprises at least one ethylenically unsaturated monomer which is copolymerizable with the aromatic compound.

In one embodiment, the alkenyl aromatic compound of Formula I may be represented by the following formula

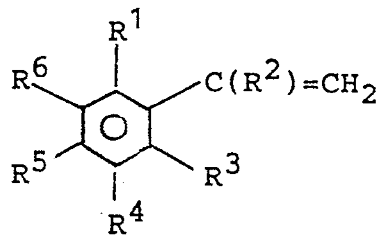

(II)

wherein $R^1$, $R^3$, $R^4$, $R^5$ and $R^6$ are each independently hydrogen, chlorine, bromine, or alkyl groups containing from 1 to about 4 carbon atoms, and $R^2$ is hydrogen or methyl, with the proviso that a total number of carbon atoms in the monomer does not exceed 12.

Examples of such alkenyl-substituted aromatic monomers include styrene, alpha-methylstyrene, o-methylstyrene, m-methylstyrene, p-methylstyrene, o-chlorostyrene, p-chlorostyrene, 2,6-dichlorostyrene, o-bromostyrene, etc. Examples of ethylenically unsaturated monomers which are copolymerizable with the above styrene derivatives include methylmethacrylate, acrylonitrile, maleic anhydride, citraconic anhydride, itaconic anhydride, etc.

The preferred alkenyl-substituted aromatic resin for use in the process of the present invention is styrene resin. Styrene resins which are useful in the process of this invention may be homopolymers of a sty rene or copolymers of styrene with one or more copolymerizable ethylenically unsaturated monomers as described above. Such polymers and copolymers of styrene are available from a variety of commercial sources in a variety of molecular weights. The molecular weights of such polymers can be determined by several methods well known to those skilled in the art, such as intrinsic viscosity, light scattering, and ultracentrifuge sedimentation. The flow rate of the melted polymer through an orifice, sometimes described as melt flow index (MFI) also may be used to compare molecular weight relationships. MFI is a low cost, easily performed technique. Details may be found in a number of publications, such as Principles of Polymer Chemistry, by P.J. Flory, Cornell University Press, Ithaca, New York, 1953. Polymers having weight average molecular weights of from about 100,000 to about 500,000 are useful, with preferred about 150,000 to about 450,000 and most preferred about 250,000 to about 350,000.

Useful styrene resins (also referred to herein as polystyrenes) are available commercially from a variety of sources and the resins are available with different properties such as melt flow index. For example, polystyrenes are available from ARCO Chemical Company under the general designation "DYLENE", for example DYLENE 8, and from Polysar Ltd., Sarnia, Ontario.

In one embodiment, the properties of the extruded, expanded foamed products obtained by the process of the present invention can be controlled and modified by the selection of the molecular weight of the resins. For example, the preparation of lower density foam polystyrene bodies is facilitated by using higher molecular weight resins whereas the preparation of higher density foam bodies is facilitated by the use of lower molecular weight or lower viscosity resins.

Specific examples of polymers of styrene which are copolymers include those obtained from mixtures such as: 70% styrene and 30% acrylonitrile; 80% styrene and 20% vinyl toluene., 75% styrene and 25% methylmethacrylate; etc.

The volatile and fluid blowing agents utilized in the present invention comprise at least one of 1-chloro-1,1-difluoroethane (R-142b); 1,1,1,2-tetrafluoroethane (R-134a); 1-chloro-1,2,2,2-tetrafluoroethane (R-141); 2-chloro-1,1,1,2-tetrafluoroethane (R-124); or mixtures of two or more thereof. Preferred blowing agents are 1,chloro-1,1-difluoroethane; 1-chloro-1,2,2,2-tetrafluoroethane; and mixtures thereof. The amount of the blowing agent added to the heat-plastified alkenyl-substituted aromatic resins is from about 3 to about 16 parts or more by weight per 100 parts by weight of resin. Variations in the amount of blowing agent incorporated into the resin may be utilized, depending in part on the components of the blowing agent mixtures, to prepare extruded foamed bodies having different desirable characteristics.

In addition to the blowing agents described above, a second blowing agent may be used in step (B) of the process. Examples of optional and supplemental blowing agents include dichlorodifluoromethane (R-12), chlorodifluoromethane (R-22), carbon dioxide, pentane; butane; hexane; methyl chloride; ethylchloride and mixtures of two or more thereof. The previous list is meant to encompass all isomers of the above. For instance, butane is meant to encompass isobutane, n-butane, etc. The blowing agents in the mixture may be utilized in any proportion, provided the surface appearance of the foam remains acceptable. In a preferred embodiment of the invention, the second blowing agent is present in a minor proportion, e.g. less than 50% by weight. Examples of combinations of blowing agents include (R-142b:R-22) from (80:20) to

(50:50), (R-142b:R12) from (60:40) to (20:80); (R124: ethylene chloride) from (50:50) to (80:20); (R-134a: R-123) from (80:20) to (50:50); ((R-134a or R142b or R-22):carbon dioxide) from (99:1) to (95:5); and ((R-134a or R-142b or R-124 or R-22):pentane) from (75: 25) to (25:75).

The blowing agent or blowing agent mixture utilized in the process may be added to the alkenyl-substituted aromatic resin in any conventional manner. In one embodiment, the blowing agent or blowing agent mixture may be directly injected into a heat plastifying and mixing apparatus such as an extruder. When more than one blowing agent is to be utilized, each of the blowing agents may be separately injected into the heat-plastified resin. In one preferred embodiment, tandem extruders shown generally at 10 in Fig. 1 are utilized with the primary extruder used to introduce the blowing agent and mixing and the second extruder to control the mixing and cooling of the material. In addition to the plastified resin and blowing agent(s), the blowable resin mixtures may contain, and generally do contain other additives which are included to modify certain characteristics and or properties. Nucleating agents may be included to reduce the primary cell size. Suitable materials include talc, calcium silicate, calcium carbonate, indigo, etc. Generally from about 0.05 to about 5 parts of nucleating agent per 100 parts of resin are incorporated into the foamable resin. Plasticizers may also be added to the foamable mixture, and examples include liquid paraffin, hydrogenated coconut oil, etc. Other useful additives include flame-retardant chemicals, stabilizers, etc.

From the extruder, the heat-plastified resin-blowing agent mixture is extruded into a region of reduced pressure which is subatmospheric pressure. That is, the region comprises a vacuum chamber wherein the pressure can be controlled at desired levels to allow the blowable resin mixture to expand into a foam body within the vacuum chamber. The pressure within the vacuum chamber can be varied to facilitate the formation of foamed bodies having different but desired characteristics including cell size, cell volume and density. The pressure within the vacuum chamber generally will be maintained at less than $9.14 \times 10^4$ Pa (27 in. of Hg) absolute and generally within the range of from about $6.77 \times 10^3$ to about $9.14 \times 10^4$ Pa absolute (about 2 to about 27 in. of Hg absolute). In some applications, the pressure will be maintained between about $6.77 \times 10^3$ and $6.77 \times 10^4$ Pa (2 and 20 in. of Hg) absolute. In general, as the vacuum is increased (lower pressure), foaming of the mixture is facilitated and lower density foams are produced.

In one preferred embodiment of the invention as seen in Fig. 1, the die end 12 of the secondary extruder described above is designed to fit into, and seal off, the upper end 13 of an inclined tunnel 14 that forms a vacuum chamber or barometric leg 15. The lower end 16 of the tunnel is immersed in a pool of water 17 that seals off the other end of the vacuum chamber. The pool of water provides a mechanism of removing the finished board from the chamber without breaking the vacuum. The extruded polystyrene foamed body formed within the vacuum chamber is advanced through the chamber, through the water and then out of the vacuum chamber to atmospheric pressure on the other side of the water seal. In addition to providing a mechanism for maintaining the vacuum within the chamber, the pool of water is used to cool the foam body within the chamber.

In general operation, the extruded foam exits the die 20 seen more clearly in Fig. 2, and expansion of the mixture and shaping of the foam are controlled by arcuate rolls 22 positioned above and below the plane of the die orifice. The foam indicated at 24 exiting the die is sized for thickness, and spread out to its final width by the illustrated sets of upper and lower rolls which comprise driven wafers 25 rotating on curved axles. As illustrated, there are five such wafer roller sets above and below the foam as it exits the fan-shape die 20. Further thickness and flatness control is provided by passing the foamed panel through paired upper and lower conveyor belts 27. Foam density is determined in part by controlling the vacuum level. After the extruded foam has been sized for thickness, width and flatness, the foam is carried through the water beneath conveyor 30 driven at 31, and as the foam travels through the water it is cooled and becomes more rigid. The foam can be carried through the water seal by any convenient apparatus such as conveyor belt illustrated. In one embodiment, the foam body is carried through the water by an upper conveyor belt, the foam being held against the belt by its own flotation properties. In the illustrated preferred embodiment, the extrusion die 20 is a fan-shape die having an arcuate slot orifice 32, and the mixture exiting such fan-shape die is confined by floating shaping rolls shown.

As seen in Figs. 2 and 3, in order to more precisely control the rolls 22 as well as the conveyors 27, they may be mounted for floating movement by piston-cylinder assemblies 34. The rods of such assemblies as seen at 36 are connected to brackets 37 in turn supporting the respective rolls or the conveyor. There may be a piston-cylinder assembly for each.

Air may be supplied to the blind end or bottom of each cylinder through line 40 from source 41 through pressure regulator 42 and control valve 43. Thus a controlled pressure may be provided to the lower end of each cylinder elevating a roll 22 against its weight causing the roll essentially to float. When such floating is achieved pressure is applied to the rod end through line 45 from source 46 through regulator 47 and control

valve 48. This precisely controls the pressure of the roll against the foaming body. Because of the different radius size of each roll 22, the tare or dead weights will differ. Once floating is achieved, only a slight pressure differential is employed so that the force exerted by the roll is quite gentle.

In general, the present invention is accomplished by controlling the temperature of die lips. The temperature of the die lips is maintained at about 10° C (50° F) to about 77° C (170° F), preferably about 21° C (70° F) to about 66° C (150° F).

As seen in Figure 4, the fan-shape extrusion die 20 may for example be of the type shown in prior U.S. Patent 4,364,722 which is provided with oil passages in close proximity to the die lips 50 at the orifice 32. The die lips are provided with oil ports 51 and 52 so that the temperature of the die lips may be controlled by controlling the temperature of the circulating oil. As seen by the arrows oil enters port 51 and exits port 52. Circulation is obtained by pump 53 positioned in series with oil cooler 54 and oil heater 55. Oil exiting the die has its temperature sensed and compared to a set point by temperature controller 56 which in turn controls valve 57 controlling the flow of cooling water from water source 58 through oil cooler 54. In this manner the temperature of the die lips may be controlled and maintained at the desired range, with heat transferred from the hot metal of the die lips to the heating oil.

Ahead of the oil cooler there is provided a temperature indicator 60 and at the outlet of the pump there is provided a pressure indicator 61. The oil heater is controlled by a temperature switch 62 and power relay 63, but is used only during start-up. Oil for the system is provided from reservoir 64 through relief valve 65 and a flow indicator is provided at 66.

For a more detailed disclosure of a vacuum chamber, and shaping mechanism which may be employed, reference may be had to prior U.S. Patents 4,199,310 and 4,234,529 which are herein incorporated by reference for their disclosure of the vacuum chamber and shaping mechanism.

The alkenyl-substituted aromatic foam bodies prepared in accordance with the invention are characterized generally as follows:

Density: about 14.4 to about 56.1 kg/$m^3$ (about 0.9 to about 3.5 Pcf), preferably about 14.4 (0.9) to about 32 (2), or between about 14.4 (0.9) to about 25.6 (1.6);
Average Cell Size: about 0.2 to 0.5 mm.
Cell Volume: > 1.639 $m^3$ (> 100,000 cu.in) at lower densities; preferably > 2.459 $m^3$ (>150,000/cu.in.) at lower densities;
> 3.278 $m^3$ (>200,000/cu.in.) at densities of from about 20.8 to 25.6 kg/$m^3$ (about 1.3 to 1.6 Pcf);
> 4.098 $m^3$ (>250,000/cu.in.) at densities of from about 25.6 to 32 kg/$m^3$ (about 1.6 to 2.0 Pcf),
> 4.917 $m^3$ (>300,000/cu.in.) at densities above 32 kg/$m^3$(2.0 Pcf).

The following examples illustrate the process of the present invention and the foam bodies obtained thereby. The general procedure and the apparatus utilized in the following examples, unless otherwise indicated, is as follows. A plastified mixture of virgin polystyrene resin, recycle polystyrene resin, talc and flame-retardant is prepared, and a blowing agent mixture is incorporated into the plastified resin mixture to form a blowable resin mixture. A nucleation agent and a fire-retardant material are incorporated into the blowable mixture. The blowable resin mixture then is extruded through a die into one end of an elongated chamber maintained under vacuum whereupon the foamable mixture expands under controlled conditions to form a continuous board about 122cm (48 inches) wide and with a thickness which can be varied as desired.

In Examples 1-6, the die is a fan-shaped die having a chord length of 41.8 cm (16.46 inches), a radius of 24.1 cm (9.5 inches) and included angle of 120°. As the blowable mixture is extruded into the vacuum chamber, expansion of the foamable mixture is controlled by arcuate rolls positioned above and below the plane to form a continuous board of about 3.8 to 5.1 cm (1.5 to 2.0 inches) in thickness as desired, and about 122 cm (48 inches) wide. Other thicknesses of board may be obtained by adjusting the die opening and the arcuate rolls position. The continuous foam board is passed through the vacuum chamber through a pool of water where the foam board cools and becomes more rigid. After passing through the pool of water, the foam body is withdrawn from the opposite end of the chamber, trimmed and cut as desired.

The foamed boards which are recovered from the vacuum chamber in accordance with the process of the present invention are evaluated for density, cell size, compressive strength, k-factor, etc., by techniques known in the art. The average cell size is an average of the cell sizes as determined in the X, Y and Z directions. The "X" direction is the direction of extrusion; the "Y" direction is the cross machine direction; and the "Z" direction is the thickness. The compressive strength of the foam bodies of the present invention are determined utilizing ASTM Test C165-83 entitled "Measuring Compressive Properties of Thermal Insulation".

The remaining details of the process and of the apparatus with respect to the specific examples are contained in the description of the examples.

Examples 1-6

A plastified mixture of 100 parts of virgin polystyrene resin [ARCO Dylene 8 having a melt flow index (MFI) of 5.0], 19.4 parts by weight of recycled polystyrene, 0.45 part of talc and 0.85 part of flame-retardant is prepared, and 11.9 parts of a (60:40) by weight mixture of (R142b:R22) is incorporated into the plastified mixture to form the blowable resin mixture. The injection pressure of the blowing agent is 28269.5 KPa (4100 psi) (gauge). The crossover melt temperature is 251 °C (485 °F).

Vacuum on all test samples is 57.6 KPa (17.0 inches of mercury) (absolute). Additional details of the process, and a summary of the characteristics of the foamed boards obtained are summarized in the following Table I.

TABLE I - PART 1

| Polystyrene Board Characteristics | | | |
|---|---|---|---|
| Example | 1 | 2 | 3 |
| Die Lip Temperature (°C/°F) | 32/ 90 | 43/110 | 54/130 |
| Die Pressure (KPa gauge/PSIG) | 6033/875 | 5860/850 | 5516/800 |
| Die Melt Temperature (°F) | 125/258 | 125/258 | 125/258 |
| Product | | | |
| Surface appearance | excellent | good | good |
| Density (kg/m$^3$/pcf) | 32.68/2.04 | ---- | 31.24/1.95 |
| Avg. Cell Size (mm) | 0.43 | ---- | 0.41 |
| Cell Volume (m$^3$/cu.in.) | 1.698/103,619 | ---- | 1.959/119,507 |
| Avg. Thickness (cm/in.) | 3.751/1.477 | ---- | 3.576/1.408 |

TABLE I - PART II

| Polystyrene Board Characteristics | | | |
|---|---|---|---|
| Example | 4 | 5 | 6 |
| Die Lip Temperature (°C/°F) | 66/150 | 77/170 | 92/198 |
| Die Pressure (KPa gauge/PSIG) | 5240/760 | 5102/740 | 5171/750 |
| Die Melt Temperature (°F) | 126/259 | 127/260 | 126/259 |
| Product | | | |
| Surface appearance | good | slightly foamy | foamy |
| Density (kg/m$^3$/pcf) | 30.92/1.93 | 30.60/1.91 | 31.08/1.94 |
| Avg. Cell Size (mm) | 0.43 | 0.47 | 0.43 |
| Cell Volume (m$^3$/cu.in.) | 1.653/100,882 | 1.291/78,795 | 1.676/102,240 |
| Avg. Thickness (cm/in.) | 3.625/1.427 | 3.683/1.450 | 3.508/1.381 |

As can be seen from the above Table, the surface quality of the foam improves from "foamy" to "excellent" as the die lip temperature is reduced from 92 to 32 °C (198 °F to 90 °F)(Examples 1-6). The die melt temperature did not change significantly while the die pressure increased as die lip temperature was lowered. The surface appearance rated as "slightly foamy" (Example 5) would be acceptable in some construction applications, but the rating of "good" (Examples 2-4) would be preferred. The surface appearance rated as "excellent" is that desired by some other applications, such as graphic arts.

Examples 7-9

A plastified mixture of 100 parts of virgin polystyrene resin (ARCO Dylene 8 having a melt flow index (MFI) of 5.0a, 15.11 parts by weight of recycle polystyrene, 0.55 part of talc and 0.85 part of flame-retardant is prepared, and 11.5 parts of a (20:80) by weight mixture of (R142b:R12) is incorporated into the plastified mixture to form the blowable resin mixture. The injection pressure of the blowing agent is 31717 KPa (4600 psi) (gauge). The crossover melt temperature is 231°C (448°F). Vaccum on all test samples is 44 KPa (13.0 inches of mercury) (absolute). Additional details of the process, and a summary of the characteristics of the foamed boards obtained are summarized in the following Table II.

TABLE II

| Polystyrene Board Characteristics | | | |
|---|---|---|---|
| Example | 7 | 8 | 9 |
| Die Lip Temperature (°F)<br>Die Pressure (KPa gauge/PSIG)<br>Die Melt Temperature (°F) | 66/150<br>4495/652<br>130/266 | 77/170<br>4109/596<br>129/265 | 88/190<br>3902/566<br>129/265 |
| Product | | | |
| Surface appearance<br>Density (kg/m$^3$/pcf)<br>Avg. Cell Size (mm)<br>Cell Volume (cu.in)<br>Avg. Thickness (cm/in.) | very good<br>23.39/1.46<br>0.35<br>3.159/192,763<br>---- | very foamy<br>25.47/1.59<br>0.30<br>4.746/298,554<br>---- | very foamy<br>25.15/1.57<br>0.31<br>4.621/281,955<br>---- |

As can be seen from Table II, the surface quality of the foam improves from "very foamy" to "very good" as the oil lip temperature is reduced from 88°C (190°F) to 66°C (150°F). (Examples 7-9.) The die melt temperature remained relatively constant while die pressure increased as die lip temperature was lowered. The surface appearances rated a "very foamy" would be unacceptable (Examples 8 and 9) while the surface quality of Example 7 would be preferred. The surface appearance rated as "very good" is desired by some applications such as graphic arts. There is a narrower operating temperature range as measured by oil lip temperature when R-12 is used as a major component of the blowing agents.

As is apparent from the above description and examples, the process of the present invention for preparing foamed polystyrene bodies such as boards and billets utilizing control of die lip temperatures results in foamed bodies having acceptable and, in some instances, improved surface characteristics when the blowable mixture is extruded into a region of subatmospheric pressure. The process of the present invention produces foamed bodies with minimal surface defects by controlling the die lip temperature. This process affords an economic and relatively labor free means of controlling surface quality.

While the invention has been explained in relation to its preferred embodiments, it is to be understood that various modifications therof will become apparent to those skilled in the art upon reading the specification. Therefore, it is to be understood that the invention disclosed herein is intended to cover such modifications as fall within the scope of the appended claims.

## Claims

1. A process for preparing an extruded elongate foam body characterized as having a density of between about 14.4 and about 56.1 kg/m$^3$ (about 0.9 and about 3.5 pounds per cubic foot) which comprises the steps of

(A) heat plastifying a mixture of at least one thermoplastic resin and at least one nucleating agent;

(B) adding at least one blowing agent selected from the group consisting of chlorodifluoromethane; 1,1-dichloro-2,2,2-trifluoroethane; 1-chloro-1,1-difluoroethane; 1,1,1,2-tetrafluoroethane; 1,1-dichloro-1-fluoroethane; 1-chloro-1,2,2,2-tetrafluoroethane and mixtures of two or more thereof to the mixture;

(C) forming a blowable resin mixture by uniformly mixing the blowing agent and the mixture of step (A) under a pressure sufficient to prevent blowing of the resin;

(D) extruding the blowable resin mixture through a die, which has a die lip temperature maintained at about 10°C tp about 77°C (about 50°F to about 170°F) and into a region wherein the blowable resin mixture expands into a foam body; and

(E) cooling the foam body.

2. The process of claim 1, wherein step (B) further comprises adding a second blowing agent selected from the group consisting of:
dichlorodifluoromethane; trichlorofluoromethane; carbon dioxide; pentane; butane; hexane; methylchloride; ethyl chloride and mixtures of two or more thereof.

3. The process of claim 1 or 2 wherein the region in step (D) is at subatmospheric pressure.

4. The process of claim 3 wherein such region at subatmospheric pressure is formed by an elongated chamber with such mixture passing through a die at one end of such chamber and such foam body passing through a pool of water at the opposite end of such chamber and then passing such foam body from such chamber to atmosphere.

5. The process of claim 3 including the step of passing such mixture through a fan shape die having an arcuate slot orifice, and controlling the expansion of the mixture by arcuate rolls positioned above and below the plane of the arcuate slot orifice; wherein such arcuate rolls comprise a series of wafers driven for rotation at a controlled speed; and wherein the rolls above the plane of the orifice are floatingly supported to exert a controlled floating pressure on the mixture as it exits the die.

6. The process of claims 1 or 2 to 5, wherein the thermoplastic resin is a polystyrene.

7. The process of claims 1 or 2 to 6, wherein the blowing agent is selected from the group consisting of:
1-chloro-1,2,2,2-tetrafluoroethane; 1-chloro-1,1-difluoroethane and mixtures thereof.

8. The process of claims 1 or 2 to 7, wherein step (B) further comprises: adding a second blowing agent selected from the group consisting of carbon dioxide; pentane; butane; ethylchloride and two or more thereof.

9. The process of claims 1 or 2 to 8, wherein step (D) further comprises passing oil through the die lips and through an oil cooler, sensing the oil temperature exiting the die lips and adjusting the oil cooler accordingly to maintain the die lip temperature as aforesaid.

10. The process of claim 9, wherein the foam body is characterized by an average cell size from about 0.2 to about 0.5 mm.

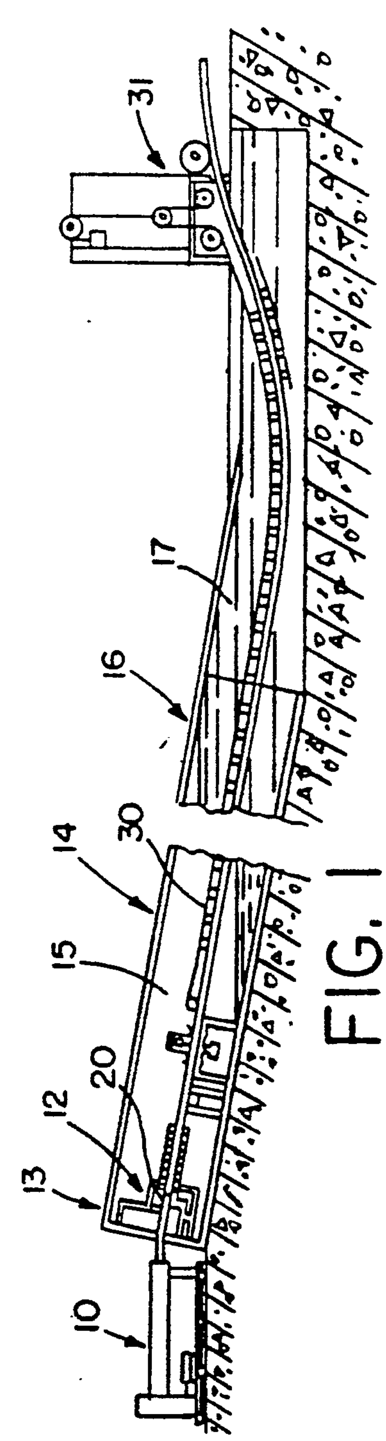


FIG. 1

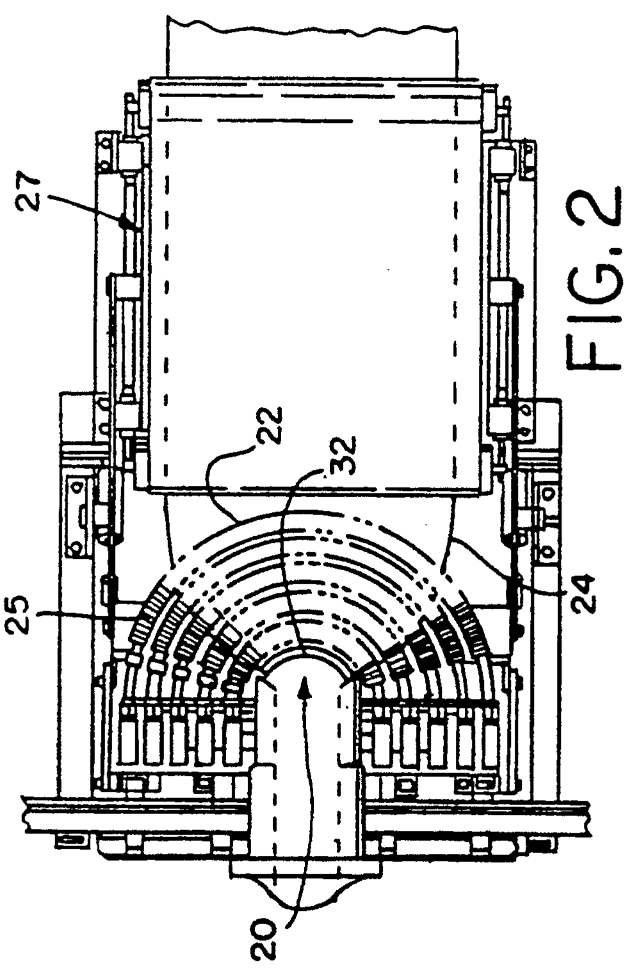


FIG. 2

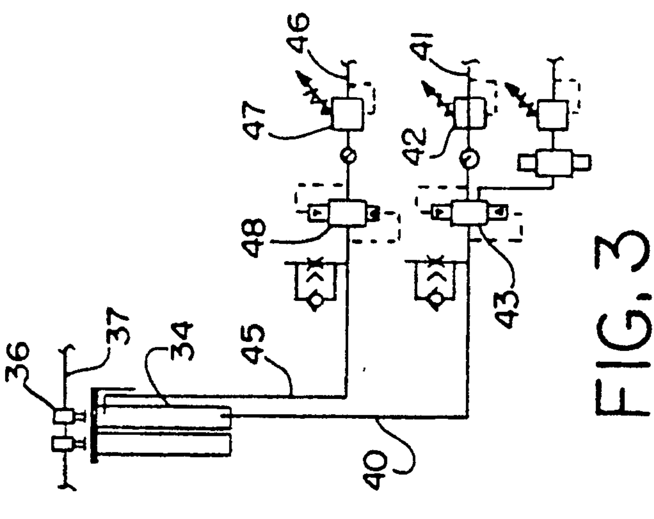


FIG. 3

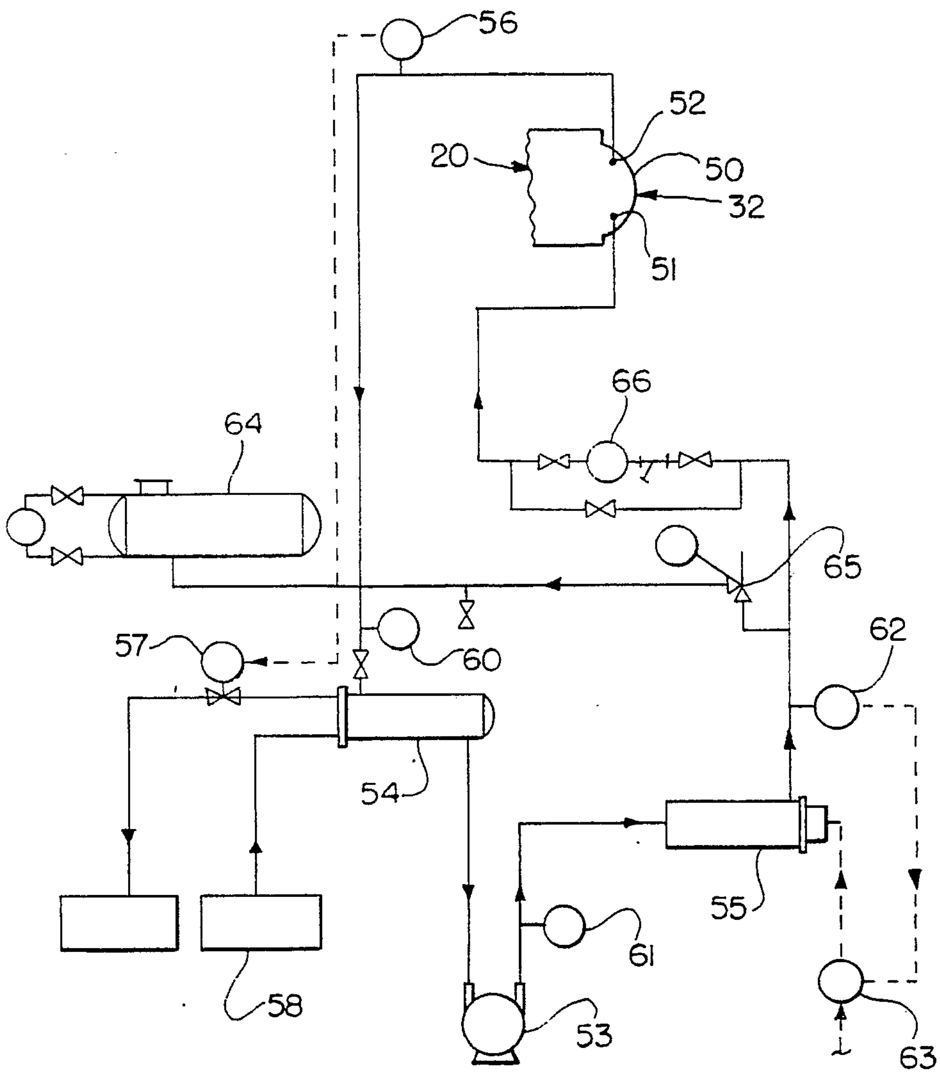


FIG. 4